# EUROPEAN PATENT APPLICATION

(11) **EP 2 451 243 A1**
(43) Date of publication of application: **09.05.2012**
(21) Application number: 10793532.2
(22) Date of filing: 21.04.2010
(51) Int. Cl.: H04W 88/06, H04B 1/38

(54) **MULTI-ANTENNA RADIO TRANSCEIVING DEVICE**

(30) Priority: 29.06.2009 CN 200910108149
(71) Applicant: Huizhou TCL Mobile Communication Co., Ltd, Guangdong 518067 (CN)
(72) Inventor: BAI, Jian, Guangdong 518067 (CN)
(74) Representative: Brachmann, Roland W.
(86) International application number: PCT/CN2010/072009
(87) International publication number: WO 2011/000237

(57) **Abstract**

A multi-antenna radio transceiving device for mobile communication terminal is provided. The multi-antenna radio transceiving device includes a base band chip, a radio frequency transceiver, a power amplifier module and a matching network, and the multi-antenna radio transceiving device also includes an antenna selecting switch and two or more antennas, wherein the radio transceiving performance indexes of the two or more antennas correspond to different application modes of the mobile communication terminal respectively, and the antenna selecting switch selects one antenna from the two or more antennas, and controls the selected antenna to connect with the matching network.

## Description

### Technical Field

The present invention belongs to the field of communication technology and more specifically, the present invention relates to a multi-antenna wireless transceiving device.

### Background Art

Prior art mobile communication terminals mostly employ internal antennas, while the environment for internal antenna applications has become increasingly harsh, which is mainly reflected in the following aspects:
1. Dual-mode and even multi-mode mobile communication terminals are increasingly popular, typically including 3G and GSM dual-mode mobile communication terminals, which require that an antenna works in a number of frequency bands. Under the GSM standard alone, mobile communication terminals have been requested to support a maximum of Quad-band (simultaneously support 4 GSM frequency bands: GSM850/EGSM/DCS/PCS), which has imposed very high multiple frequency and broadband requirements for antennas.
2. Mobile communication terminals become increasingly small, which requires thin and small exterior appearance. Such a design would certainly lead to smaller clearance for antennas, which in turn affects the antenna bandwidth and makes the development significantly more difficult.
3. There are more and more changes to the appearance of mobile communication terminals, such as flip cover and slide cover cell phones. In addition, the external environment that a mobile communication terminal is used in changes frequently, such as talking while holding the phone close to face or via an earphone; when the appearance or application environment of a mobile communication terminal changes, parameters of an internal antenna will change as well.

Despite of changing and harsh application environments, mobile communication terminals are still required to have excellent performance under various environments. Currently, mainstream antennas for mobile communication terminals include Mono-pole Antenna or Planar Inverted F Antenna (PIFA). The former has very higher clearance requirements for the antenna zone, while the latter has requirements on the height of an antenna's base. All these requirements are closely related to an antenna's working bandwidth. Current mobile communication terminals provided limited antenna clearance or base height, and a mobile communication terminal with smaller and thinner exterior appearance has less antenna clearance or smaller base height. When an antenna has many compatible frequency bands, there is an acute contradiction between the narrow antenna clearance space and the demand for wide antenna bandwidth, which greatly affects a terminal's development progress and radiation performance.

Given the above conditions, it would be very difficult to meet such complex performance demand with only one single antenna matching network, which tends to result in overly long R&D periods and poor performance of mobile communication terminals.

How to improve the wireless performance of a mobile communication terminal through multiple antennas is a problem that has not been solved by the prior art.

### Disclosure of Invention

### Technical Problem

The object of the present invention is to provide a multi-antenna wireless transceiving device so as to solve the issue of wireless transceiving performance of mobile communication terminals.

### Technical Solution

The present invention is realized in the following manner: a multi-antenna wireless transceiving device applicable for mobile communication terminals, comprising a baseband chip, a radio frequency (RF) transceiver, a power amplification (PA) module and a matching network, and said multi-antenna wireless transceiving device further comprises an antenna selection switch and two or more antennas, wherein:
- Wireless transceiving performance indexes of said two or more antennas correspond to different application modes of a mobile communication terminal, respectively;
- Said antenna selection switch is used for selecting one out of said two or more antennas and controlling said selected antenna to be communicated with said matching network.

Said antenna selection switch is connected to said baseband chip, and according to the current application mode of the mobile communication terminal, said baseband chip is used to control said antenna selection switch to select one out of said two or more antennas that corresponds to said current application for communication with said matching network.

Said mobile communication terminal is a flip cover mobile communication terminal, and according to the current working channel interval of said mobile communication terminal, said baseband chip is used to control said antenna selection switch to select one out of said two or more antennas for communication with said matching network, and the wireless transceiving performance index of said selected antenna corresponds to the current working channel range of said mobile communication terminal.

Said wireless transceiving performance index is working frequency band, and the channel range covered by the working frequency band of said selected antenna corresponds to the current working channel interval of said mobile communication terminal.

Said mobile communication terminal is a multi-mode mobile communication terminal, and according to the current working standard of said mobile communication terminal, said baseband chip is used to control said antenna selection switch to select one out of said two or more antennas for communication with said matching network, and the wireless transceiving performance index of said selected antenna corresponds to the current working standard of said mobile communication terminal.

Said mobile communication terminal currently works in low frequency bands, said selected antenna has resonance frequency at low frequencies, and its working bandwidth and radiation efficiency cover all frequency points at low frequencies; said mobile communication terminal currently works in high frequency bands, said selected antenna has resonance frequency at high frequencies, and its working bandwidth and radiation efficiency cover all frequency points at high frequencies.

Said mobile communication terminal is a mobile communication terminal equipped with a PIFA antenna, and according to the current working channel interval of said mobile communication terminal, said baseband chip is used to control said antenna selection switch to select one out of said two or more antennas for communication with said matching network, and the wireless transceiving performance index of said selected antenna corresponds to the current working channel interval of said mobile communication terminal.

Said wireless transceiving performance index is working frequency band, and the channel range covered by the working frequency band of said selected antenna corresponds to the current working channel interval of said mobile communication terminal.

### Advantageous Effects:

The present invention overcomes drawbacks of the prior art by configuring two or more antennas to a mobile communication terminal. The mobile communication terminal can select one antenna therefrom according to its current application mode, thereby optimizing its wireless transceiving performance. The technical solution provided by the present invention leads to optimized wireless performance of the mobile communication terminal in various application modes, improves client satisfaction, and is also helpful for optimizing the mobile network and improving the network capability.

### Brief Description of Drawings

- Fig.1: is a system block diagram of a multi-antenna wireless transceiving device provided in an embodiment of the present invention;
- Fig.2: is a flow chart of an embodiment of the present invention.

### Best Mode for Carrying Out the Invention

To make the object, technical solution and advantages of the present invention clearer, the present invention is further described in detail below with reference to the accompanying drawings and embodiments. It should be understood that the embodiments described herein are used only to describe the present invention with no intention to limit the present invention in any way.

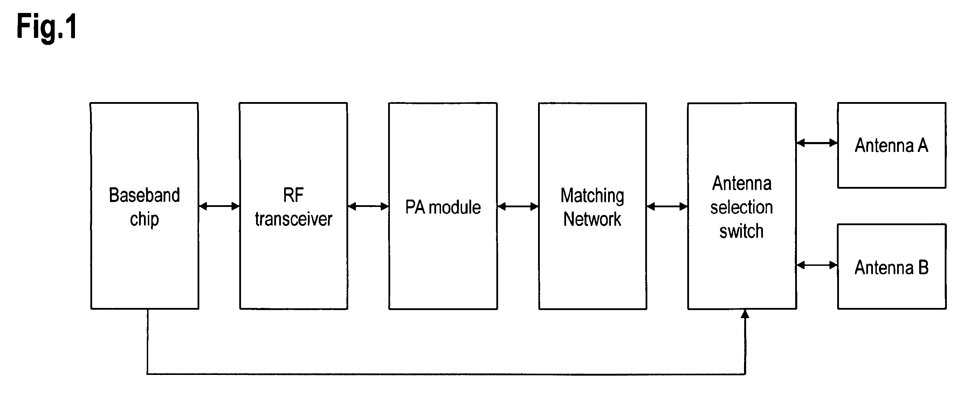

The system block diagram of a wireless transceiving device for mobile communication terminals provided in the embodiment of the present invention is shown in Fig. 1, which comprises a baseband chip, a RF transceiver, a PA module, two or more antennas (for example, Antenna A and Antenna B in Fig. 1), a matching network, and an antenna selection switch, wherein, the baseband chip is connected to the RF transceiver via a data line and a control line, the RF transceiver is connected to the PA module via a RF transmission line, the PA module is connected to the matching network, the matching network are connected to the antenna selection switch, the antenna selection switch is connected to Antenna A and Antenna B, and the baseband chip is further connected to the antenna selection switch.

According to a working mode of the mobile communication terminal, such as current working standard, exterior appearance and application environment, the baseband chip is used to control the antenna selection switch, and according to the control by the baseband chip, the antenna selection switch is used to select the matching network to communicate with Antenna A or to select the matching network to communicate with Antenna B. A high frequency switch can be used as the antenna selection switch that is controlled by the GPIO (General Purpose Input/ Output) of the baseband chip.

When a mobile communication terminal transmits a signal, the baseband chip encodes and modulates audio and data information collected or generated by the mobile communication terminal, and thereby a baseband modulation signal S-B is obtained. The baseband chip transmits the S¬B to the RF transceiver via the data line, and the RF transceiver up converts the baseband modulation signal to a RF signal SRF. The RF transceiver transmits the RF signal SRF to the PA module via the RF transmission line. According to the current application mode of the mobile communication terminal, such as working standard, exterior appearance and application environment, the baseband chip controls the antenna selection switch, and according to the control by the baseband chip, the antenna selection switch is used to select the matching network to communicate with Antenna A or to select the matching network to communicate with Antenna B. When the matching network communicates with Antenna A or Antenna B, the PA module amplifies SRF and transmits to Antenna A or Antenna B via the matching network, and Antenna A or Antenna B ultimately transmits the same out.

When a mobile communication terminal receives a signal, according to the current application mode of the mobile communication terminal, such as working standard, exterior appearance and application environment, the baseband chip controls the antenna selection switch, and according to the control by the baseband chip, the antenna selection switch is used to select Antenna A to communicate with the antenna or to select Antenna B to communicate with the antenna. When the matching network communicates with Antenna A or Antenna B, Antenna A or Antenna B receives the external RF signal SRF, which is amplified by the PA module and transmitted to the RF transceiver. The RF transceiver down converts the RF signal SRF to a baseband modulation signal S-B and transmits to the baseband chip. The baseband chip demodulates and decodes the same to obtain audio or digital information. The RF transceiver down converts the RF signal SRF to a baseband modulation signal S¬B and transmits to the baseband chip. The baseband chip demodulates and decodes the same to obtain audio or digital information.

In specific embodiments of the technology provided by the present invention, according to specific situations in the process of developing a mobile communication terminal, the number of antennas is selected, a working frequency range is assigned to each antenna, and different antennas are designed according to the selected working frequency ranges. At the same time, the position of each antenna inside the mobile communication terminal is determined. Since the antennas do not work simultaneously, it is not necessary to space them far apart.

Specific applications of the technology provided by the present invention include but are not limited to the following cases:
1. For a flip cover mobile communication terminal with relatively short motherboard, at low frequencies, the small motherboard size results in a reduced main ground length, which subsequently affects the antenna's bandwidth at low frequencies. When the cover is closed, it will be relatively difficult to satisfy the bandwidth at low frequencies. In such a circumstance, two antennas can be used to carry out wireless receiving and transmitting tasks. Make the two antennas work in different channel intervals at low frequencies, and wireless signals in different channel intervals are received through the antennas with different performances. For example, channels of low frequency GSM850 are numbered from channel 128 to channel 251 with a total of 124 channels covering a 25 MHz bandwidth. For the above case of relatively short main ground length, a single antenna would be difficult to cover a bandwidth of 25 MHz. Two antennas (Antenna A and Antenna B) can be designed. Antenna A has the optimal wireless transceiving performance in channel 128 to channel 190, and Antenna B has the optimal wireless transceiving performance in channel 191 to channel 251. In practical applications, if a mobile communication terminal works in a high channel interval (channel 191 to channel 251), then the baseband chip controls the matching network to communicate with Antenna B via an antenna selection switch; if the mobile communication terminal works in a low channel interval (channel 128 to channel 190), then the baseband chip controls the matching network to communicate with Antenna A via the antenna selection switch. Regardless of which channel the mobile communication terminal works in, optimal radiation performance can be obtained in the end. As far as an antenna is concerned, consequently, its bandwidth demand at low frequencies is reduced, which in turn lowers the requirement for the PCB length, greatly reduces the design difficulty and enables terminals of relatively short lengths to obtain excellent radiation performance as well. In such a way, bandwidth demand over the entire low frequencies can be met and at the same time, the requirement for PCB length can be lowered correspondingly. As a result, the flip cover mobile communication terminal can be designed to be relatively small and short. In such a circumstance, Antenna A and Antenna B can have similar shape and structure; however, the length of harmonic oscillator needs to be designed separately for Antenna A and Antenna B such that their working frequency bands are different with the working frequency band of Antenna A covering channel 128 to channel 190 and the working frequency band of Antenna B covering channel 191 to channel 251. When the mobile communication terminal switches from open flip to closed flip or from closed flip to open flip, the baseband chip will select Antenna A or Antenna B to communicate with the matching network based on the working channel interval at open flip or closed flip.
2. For a multi-mode mobile communication terminal, different antennas can be configured according to different working standards. For receiving and transmitting wireless signals under different standards, different antennas' performance parameters, such as return loss and VSWR (Voltage Standing Wave Ratio), can all reach optimal values under their respective corresponding working standard. For a dual-mode terminal of WCDMA Band I (working frequency band at 2.1 GHz) and GSM (working frequency band at 850 MHz/900 MHz/1800/1900 MHz), for example, it would be difficult to use only one antenna to cover 5 frequency bands. During design, two antennas (Antenna A and Antenna B) can be selected. Antenna A has the optimal radiation performance at 1800/1900/2100 MHz, and Antenna B has the optimal radiation performance at 850/900 MHz. In practical applications, if a mobile communication terminal works in a high frequency band (2100 MHz or 1800 MHz or 1900 MHz), then the matching network can be controlled via an antenna selection switch to communicate with Antenna A; if the mobile communication terminal works in a low frequency band (850 MHz/900 MHz), then the matching network can be controlled via the antenna selection switch to communicate with Antenna B. Regardless of which frequency band the mobile communication terminal works in, optimal radiation performance can be obtained. As a result, optimal wireless performance can be obtained under different standards. In such a circumstance, shapes, widths and lengths of Antenna A and Antenna B all need to be designed separately such that Antenna A has resonance frequency at high frequencies (2100 MHz, 1800 MHz and 1900 MHz), its working frequency bands and radiation efficiency need to completely cover all frequency points at high frequencies, and the size thereof is often smaller; such that Antenna B has resonance frequency at low frequencies (850 MHz/900 MHz), its working frequency bands and radiation efficiency need to completely cover all frequency points at high frequencies, and the size thereof is often bigger.
3. For a mobile communication terminal equipped with a PIFA (Planar Inverted F Antenna) that does not have sufficient height, optimal wireless performance can be achieved by selecting and using different antennas. When the mobile communication terminal works in different channel intervals, different antennas are selected to communicate with the matching network, and the wireless transceiving performance of the selected antenna corresponds to the current working channel interval of the mobile communication terminal. The selected antenna's performance parameters, such as return loss and VSWR, can all reach optimal values. For example, channels of high frequency DCS (digital cellular system 1800 MHz) are from channel 512 to channel 885 with a total of 374 channels covering a bandwidth of 75 MHz. For the PIFA antenna with insufficient height (typically seen in very thin terminals), the bandwidth is relatively narrow, and a single antenna would be difficult to cover the entire 75 MHz bandwidth. Therefore, two antennas (Antenna A and Antenna B) can be designed. Antenna A has the optimal performance in channel 512 to channel 698, and Antenna B as the optimal performance in channel 699 to channel 885. In practical applications, if a mobile communication terminal works in a low channel interval (channel 512 to channel 698), then the matching network can be controlled via an antenna selection switch to communicate with Antenna A; if the mobile communication terminal works in a high channel interval (channel 699 to channel 885), then the matching network can be controlled via an antenna selection switch to communicate with Antenna B. Regardless of which channel the terminal works in, optimal radiation performance can be obtained. Through the above design, the working range of each antenna is reduced from 75 MHz to 37.5 MHz, which greatly reduces the design difficulty and can achieve excellent radiation performance in all channels even when the terminal does not have a sufficient PIFA antenna height. In such a circumstance, Antenna A and Antenna B can have similar shape and structure; however, the length of harmonic oscillator needs to be designed separately for Antenna A and Antenna B such that their working frequency bands are slightly different with the working frequency band of Antenna A covering channel 512 to channel 698 and the working frequency band of Antenna B covering channel 698 to channel 885.

In some circumstances, if a frequency point in the current zone requires Antenna A, while the working band of a neighboring zone is within a working frequency range of Antenna B, information detection for neighboring zones at this time cannot be completed just through Antenna A. On the contrary, the antennas should be switched in turn during zone detection time slots or within detection channels so as to perform an optimal search of neighboring zones and handover.

In the present invention, the mobile communication terminal can be of a GSM standard, or 3G or other standards, and may even be a multi-mode mobile communication terminal.

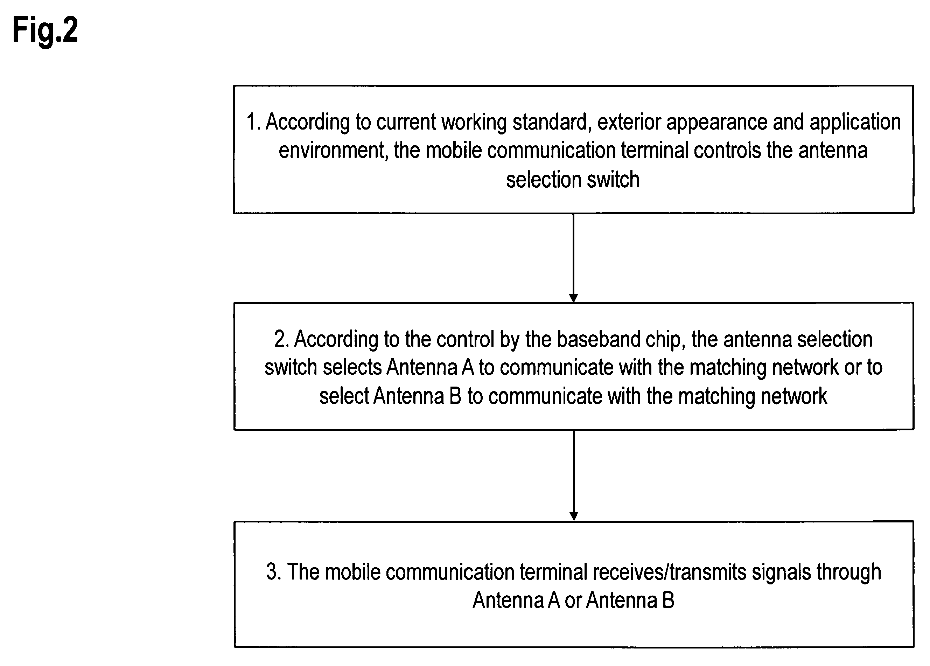

The flow chart of an embodiment of the present invention is shown in Fig. 2, specifically comprising the following steps:
1. According to current working standard, exterior appearance and application environment, the mobile communication terminal controls the antenna selection switch;
2. According to the control by the baseband chip, the antenna selection switch selects Antenna A to communicate with the matching network or to select Antenna B to communicate with the matching network;
3. The mobile communication terminal receives/transmits signals through Antenna A or Antenna B.

In specific applications of the technology provided by the present invention, since they do not need to work simultaneously, multiple antennas are not sensitive regarding relative positions thereof. As a result, the available space can be fully utilized; moreover, since each antenna has more narrow working frequency bands, some techniques can be employed to reduce antenna sizes and increase antenna VSWR (e.g. application of new materials for antenna bases). Such an implementation method can guarantee that all working frequency bands of the mobile communication terminal have excellent radiation performance.

The above description is only about preferred embodiments of the present invention with no intention to limit the present invention. Any modification, equivalent replacement and improvement made within the spirit and principle of the present invention shall be encompassed in the scope defined by claims herein.

Mode for Carrying Out the Invention

Industrial Applicability

Sequence Listing Free Text

## Claims

1. A multi-antenna wireless transceiving device applicable for mobile communication terminals, comprising a baseband chip, a RF transceiver, a PA module and a matching network, **characterized in that** said multi-antenna wireless transceiving device further comprises an antenna selection switch and two or more antennas, wherein:
- Wireless transceiving performance indexes of said two or more antennas correspond to different application modes of a mobile communication terminal, respectively;
- Said antenna selection switch is used for selecting one out of said two or more antennas and controlling said selected antenna to be communicated with said matching network.

2. The wireless transceiving device as set forth in Claim 1, **characterized in that** said antenna selection switch is connected to said baseband chip, and according to the current application mode of the mobile communication terminal, said baseband chip is used to control said antenna selection switch to select one out of said two or more antennas that corresponds to said current application for communication with said matching network.

3. The wireless transceiving device as set forth in Claim 2, **characterized in that** said mobile communication terminal is a flip cover mobile communication terminal, and according to the current working channel interval of said mobile communication terminal, said baseband chip is used to control said antenna selection switch to select one out of said two or more antennas for communication with said matching network, and the wireless transceiving performance index of said selected antenna corresponds to the current working channel range of said mobile communication terminal.

4. The wireless transceiving device as set forth in Claim 3, **characterized in that** said wireless transceiving performance index is working frequency band, and the channel range covered by the working frequency band of said selected antenna corresponds to the current working channel interval of said mobile communication terminal.

5. The wireless transceiving device as set forth in Claim 2, **characterized in that** said mobile communication terminal is a multi-mode mobile communication terminal, and according to the current working standard of said mobile communication terminal, said baseband chip is used to control said antenna selection switch to select one out of said two or more antennas for communication with said matching network, and the wireless transceiving performance index of said selected antenna corresponds to the current working standard of said mobile communication terminal.

6. The wireless transceiving device as set forth in Claim 5, **characterized in that** said mobile communication terminal currently works in low frequency bands, said selected antenna has resonance frequency at low frequencies, and its working bandwidth and radiation efficiency cover all frequency points at low frequencies; said mobile communication terminal currently works in high frequency bands, said selected antenna has resonance frequency at high frequencies, and its working bandwidth and radiation efficiency cover all frequency points at high frequencies.

7. The wireless transceiving device as set forth in Claim 2, **characterized in that** said mobile communication terminal is a mobile communication terminal equipped with a PIFA antenna, and according to the current working channel interval of said mobile communication terminal, said baseband chip is used to control said antenna selection switch to select one out of said two or more antennas for communication with said matching network, and the wireless transceiving performance index of said selected antenna corresponds to the current working channel interval of said mobile communication terminal.

8. The wireless transceiving device as set forth in Claim 7, **characterized in that** said wireless transceiving performance index is working frequency band, and the channel range covered by the working frequency band of said selected antenna corresponds to the current working channel interval of said mobile communication terminal.
